# EUROPÄISCHE PATENTSCHRIFT

(11) **EP 1 088 242 B1**
(45) Veröffentlichungstag und Bekanntmachung des Hinweises auf die Patenterteilung: **23.08.2006**
(21) Anmeldenummer: 99927820.3
(22) Anmeldetag: 01.06.1999
(51) Int. Cl.: G01R 33/44

(54) **VERFAHREN UND VORRICHTUNG ZUM BESTIMMEN DER DICHTE VON TABAK MITTELS KERNSPINRESONANZ**
METHOD AND DEVICE FOR DETERMINING THE DENSITY OF TOBACCO USING NUCLEAR MAGNETIC RESONANCE
PROCEDE ET DISPOSITIF POUR DETERMINER LA DENSITE DE TABAC PAR RESONANCE MAGNETIQUE NUCLEAIRE

(30) Priorität: 09.06.1998 DE 19825592
(43) Veröffentlichungstag der Anmeldung: 04.04.2001
(73) Patentinhaber: Focke & Co. (GmbH & Co. KG), 27283 Verden (DE)
(72) Erfinder: FOCKE, Heinz, D-27283 Verden (DE); KNOOP, Hubertus, D-35708 Haiger (DE)
(74) Vertreter: Wasiljeff, Johannes M.B.
(86) Internationale Anmeldenummer: PCT/EP1999/003783
(87) Internationale Veröffentlichungsnummer: WO 1999/064883

(56) Entgegenhaltungen:
- EP-A2- 0 656 180
- EP-A2- 0 656 181
- DE-A1- 3 312 841
- US-A- 3 783 373
- US-A- 4 531 093
- US-A- 5 049 819

## Beschreibung

Die Erfindung betrifft ein Verfahren zum Bestimmen der Dichte von Tabak, insbesondere von geschnittenem Tabak zum Herstellen von Tabakwaren, bei dem Tabak in eine Meßeinrichtung eingebracht und aus einem von der Meßeinrichtung gewonnenen Meßsignal die Dichte des Tabaks ermittelt wird. Ferner betrifft die Erfindung eine Vorrichtung zum Regeln der Tabakdichte beim Herstellen von Tabakwaren.

Es ist bekannt, die Dichte von Tabak mit infrarotem oder sichtbarem Licht (siehe z.B. die EP-A-0656181) oder mit Mikrowellen (siehe z.B. die US-A-3783373) zu messen. Ferner wurde vorgeschlagen, radioaktive Strahlung, beispielsweise Betastrahlung, oder Röntgenstrahlung zum Ermitteln der Tabakdichte einzusetzen.

Diese bekannten Verfahren haben den Nachteil, daß sie entweder ungenau, träge oder gefährlich sind. Insbesondere beim Einsatz von radioaktiven Strahlern sind hohe Sicherheitsmaßnahmen erforderlich, um Unfälle zu vermeiden. Diese Sicherheitsmaßnahmen verursachen hohe Kosten.

Der Erfindung liegt daher die Aufgabe zugrunde eine weitere Dichtemessung zur Verfügung zu stellen, die diese Nachteile vermeidet.

Zur Lösung dieser Aufgabe ist das erfindungsgemäße Verfahren dadurch gekennzeichnet, daß mit der Meßeinrichtung eine des Meßsignal liefernde Kernspinresonanzmessung durchgeführt wird. Weiterhin ist erfindungsgemäß eine Vorrichtung gemäß Anspruch 15 vorgesehen.

Der Einsatz einer Kernspinresonanzmessung ist deshalb vorteilhaft, da hierbei keine Radioaktivität oder Röntgenstrahlung auftritt. Die Kernspinresonanzmessung ist unschädlich und führt zu keinen Wechselwirkungen mit dem untersuchten Tabak. Es besteht daher nicht die Gefahr einer Kontamination des Tabaks.

Das erfindungsgemäße Verfahren bzw. die erfindungsgemäße Vorrichtung wird vorteilhaft in einem Regelkreis im Herstellungsprozeß von Zigaretten eingesetzt. Im Regelkreis wird die gemessene Tabakdichte mit einem Sollwert verglichen und anhand des Vergleichsergebnisses die Tabakzufuhr geregelt.

Weitere Einzelheiten der Erfindung werden nachfolgend anhand eines in den Zeichnungen dargestellten Ausführungsbeispiels näher erläutert. Es zeigt:
- Fig. 1: ein Prinzipschaltbild eines gepulsten Kernspinresonanzmeßsystems;
- Fig. 2: ein Prinzipschaltbild eines Teils einer Anlage zum Herstellen von Zigaretten mit einer Kernspinresonanzmeßeinrichtung in einem Regelkreis zum Regeln der Tabakdichte;
- Fig. 3: eine Skizze einer Anordnung zum Bestimmen der Feuchtigkeit von Tabak.

Das Prinzip der Kernspinresonanzspektroskopie ist bekannt. Es wird daher nachfolgend nur kurz erläutert:

Atomkerne sind elektrisch geladen und führen Eigendrehungen aus. Dieses Phänomen bezeichnet man auch als Kernspin. Die rotierende Ladung erzeugt ein magnetisches Dipolmoment. Die Momente vieler Atomkerne sind zunächst statistisch regellos verteilt, richten sich aber unter Einfluß eines äußeren Magnetfeldes aus. Dabei können die magnetischen Momente der einzelnen Kernspins entweder parallel und dabei energiearm oder antiparallel und dabei energiereich zum äußeren Magnetfeld ausgerichtet sein. Dies bezeichnet man auch als Richtungsquantelung.

Der sich unter Einfluß des äußeren Magnetfeldes einstellende Gleichgewichtszustand wird durch einen breitbandigen Hochfrequenzimpuls gestört. Die Protonen nehmen Energie auf; sie gehen in Resonanz. Der Vektor der magnetischen Momente wird in Richtung des Impulses gedreht. Nach Abschalten des Impulses fallen die Protonen in ihren Ausgangszustand (gemäß dem Gleichgewichtszustand) zurück. Dadurch wird in einer umgebenden Spule ein magnetisches Wechselfeld induziert. Dieses meßtechnisch auswertbare Signal ist proportional zur Anzahl der Protonen in der Spule.

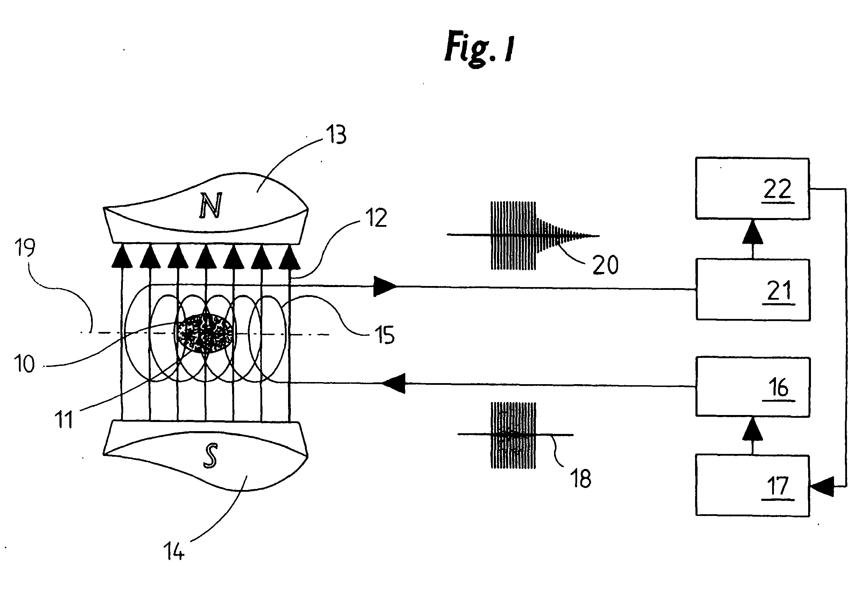

Fig. 1 zeigt eine Anordnung geeignet zum Durchführen einer Kernspinresonanzmessung. Zu untersuchender Tabak 10 liegt auf einer Aufnahmeunterlage 11 und wird einem äußeren Magnetfeld 12 ausgesetzt. Dieses äußere Magnetfeld 12 ist von im wesentlichen konstanter Feldstärke. Es wird gebildet von einem Permanentmagneten, der einen Nordpol 13 und einen Südpol 14 aufweist. Durch Anlegen dieses äußeren Magnetfeldes 12 präzessieren die magnetischen Dipole des Tabaks um das äußere Magnetfeld 12.

Der Tabak 10 wird ferner umgeben von einer Hochfrequenzspule 15. Die Hochfrequenzspul e 15 ist verbunden mit einem Hochfrequenzsender 16. Der Hochfrequenzsender 16 ist mit einem Impulsgenerator 17 verbunden. Hochfrequenzsender 16 und Impulsgenerator 17 erzeugen einen Hochfrequenzimpuls 18, welcher der Hochfrequenzspule 15 zugeführt wird.

Die Hochfrequenzspule 15 ist derart angeordnet, daß ihre Längsachse 19 im wesentlichen im rechten Winkel zu den Feldlinien des äußeren Magnetfeldes 12 ausgerichtet ist. Durch diese Ausrichtung ist die größtmögliche Drehung des Vektors der magnetischen Momente erzielbar. Durch Anlegen des Hochfrequenzimpulses 19 dreht sich die Richtung des Vektors der magnetischen Momente bzw. der makroskopischen Magnetisierung. Dabei ist der Winkel der Drehung abhängig von der Impulsdauer, der Impulsamplitude und der Frequenz. Ferner hat auch die Anordnung der Spule, nämlich ihre Ausrichtung Einfluß auf die Drehung der makroskopischen Magnetisierung. Man erzielt beste Ergebnisse, wenn die Spulenlängsachse 19 senkrecht zu den Magnetfeldlinien 12 des äußeren Magnetfeldes steht.

Nach Abschalten des Hochfrequenzimpulses 18 fallen die magnetischen Dipole wieder in ihren Ausgangszustand zurück, nämlich in den Zustand, bei dem sie um das äußere Magnetfeld 12 präzessieren. Bei diesem Zurückfallen in den Ausgangszustand wird ein magnetisches Wechselfeld in die Hochfrequenzspule 15 induziert. Das induzierte Signal 20 wird an der Hochfrequenzspule 15 abgegriffen und einem Empfänger 21 zugeführt und von einem Computer 22 ausgewertet. Der Computer 22 steuert außerdem auch den Impulsgenerator 17, der zusammen mit dem Hochfrequenzsender 16 den Hochfrequenzimpuls 18 formt.

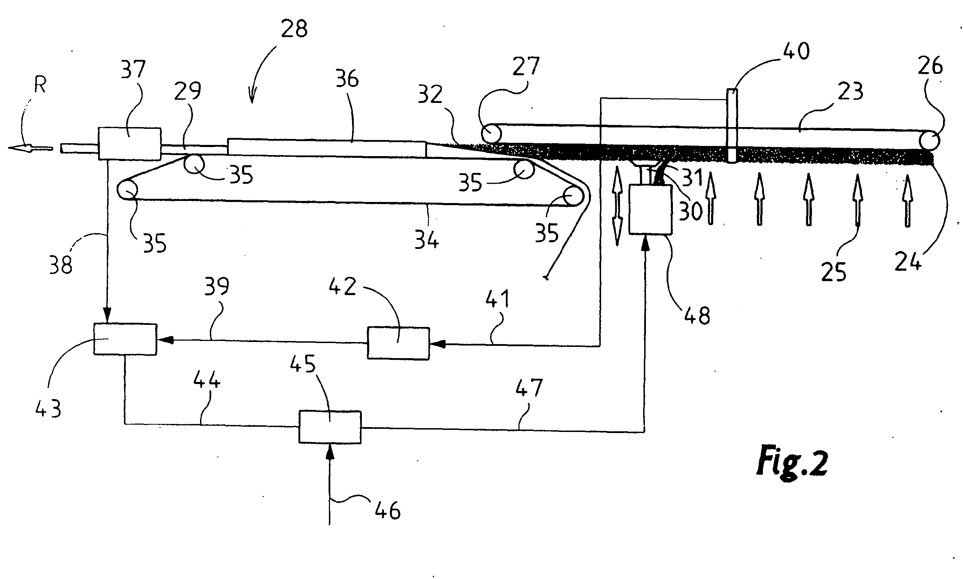

Fig. 2 zeigt den Einsatz des zuvor beschriebenen Verfahrens und der Meßeinrichtung in einem in einer Maschine zum Herstellen von Zigarettensträngen angeordneten Regelkreis.

Ein Tabakband 23 nimmt Tabak 24 auf. Die Aufnahme des Tabaks 24 erfolgt dadurch, daß das Tabakband 23 luftdurchlässig ist und auf der einen Seite des Tabakbandes 23 ein Unterdruck erzeugt wird, so daß Tabak 24 auf der anderen Seite des Tabakbandes 23 angesaugt wird und am Tabakband 23 haften bleibt. Dabei wird der Tabak 24 von einem nicht dargestellten Vorratsbehälter nach oben (entgegen der Schwerkraft) in Richtung des Tabakbandes angesaugt. Zusätzlich unterstützt Blasluft 25 die Aufnahme des Tabaks 24 auf dem Tabakband 23. Die Blasluft 25 drückt den Tabak 24 von unten gegen das Tabakband 23.

Das Tabakband 23 ist über zwei Umlenkwalzen 26, 27 geführt. Diese Umlenkwalzen 26, 27 treiben das Tabakband 23 an und fördern den Tabak 24 in Richtung einer Formateinrichtung 28.

Der infolge des Unterdrucks vom Tabakband 23 aufgenommene Tabak 24 weist eine Überschußmenge auf. Das heißt, es wird mehr Tabak aufgenommen und in Richtung der Formateinrichtung 28 transportiert, als für die Herstellung eines Zigarettenstrangs 29 notwendig ist. Ein Egalisator 30 nimmt die Überschußmenge wieder vom zugeführten Tabak 24 ab. Dazu weist der Egalisator 30 zwei gegenläufig rotierende Messer 31 auf. Die Messer 31 sind vertikal verstellbar angeordnet. Durch Variieren der Höhe der Messer 31 kann die Menge des dem Tabakstrom entnommenen Tabaks 24 beeinflußt werden. Der abgetrennte Tabak fließt wieder dem Tabakvorrat zu. Auf diese Weise geht der überschüssige Tabak nicht verloren.

Das Tabakband 23 transportiert den Tabak 24 als sogenannten Tabakstrang 32 weiter in Richtung der Formateinrichtung 28. In dieser Formateinrichtung 28 wird der Tabakstrang 32 von einer Außenumhüllung 33 umhüllt. Bei der Außenumhüllung 33 handelt es sich um Zigarettenpapier, welches der Formateinrichtung 28 als Endlospapier zufließt. Ein Formatband 34 führt die Außenumhüllung 33 über mehrere Umlenkwalzen 35 zu einer Strangeinheit 36. In dieser Strangeinheit 36 wird der Tabakstrang 32 mit der Außenumhüllung 33 umgeben. Ferner wird in der Strangeinheit 36 die Außenumhüllung 33 beleimt und getrocknet, so daß die Außenumhüllung 33 eine verklebte, Tabak umgebende Röhre bildet. Dabei entsteht der Zigarettenstrang 29.

Der Tabak im Zigarettenstrang 29 soll eine konstante Dichte aufweisen. Dies ist nicht ohne weiteres gewährleistet, da die vom Tabakband 23 aufgenommene Tabakmenge 24 schwanken kann. Außerdem können beim Schneiden des Tabaks 24 unterschiedliche Streifendicken, insbesondere infolge unterschiedlicher Tabakblattdicken auftreten, die Einfluß auf die Menge bzw. Dichte des vom Tabakband 23 aufgenommenen Tabak 24 haben.

Die in Fig. 2 dargestellte Vorrichtung weist daher Mittel zum Regeln der Tabakdichte im Zigarettenstrang 29 auf. Dazu ist eine Tabakdichtemeßeinrichtung 37 vorgesehen. Die Meßeinrichtung 37 ist derart angeordnet, daß sie der Zigarettenstrang 29 durchläuft. Auf diese Weise kann der Tabak in dem bereits umhüllten Zigarettenstrang auf seine Dichte hin kontrolliert werden. Diese Meßeinrichtung 37 unterzieht den Tabak einer Kernspinresonanzmessung. Dabei wird eine Kernspinmeßeinrichtung gemäß der in Fig. 1 dargestellten Art verwendet.

Die Meßeinrichtung 37 erzeugt ein Rohsignal 38 als Maß für die Tabakdichte. Dieses Rohsignal 38 ist in etwa proportional zur Tabakdichte. Es gibt aber auch Aufschluß über die Zusammensetzung des Tabaks, insbesondere Art und Menge der enthaltenen Atome und Moleküle.

Das Rohsignal 38 wird mit einem Feuchtemeßsignal 39 verrechnet.

Zum Erzeugen des Feuchtemeßsignals 39 ist eine Feuchtemeßeinrichtung 40 vorgesehen, die Tabak am Tabakband 23 einer Feuchtemessung unterzieht. Die Feuchtemeßeinrichtung 40 erzeugt ein Signal 41, welches einer Meßbrücke 42 zugeführt wird. Die Meßbrücke 42 erzeugt schließlich das Feuchtemeßsignal 39, welches zusammen mit dem Rohsignal 38 in einer Verrechnungseinheit 43 zu einem Wert für die Tabakdichte verrechnet wird. Dieser Wert wird als Tabakdichte 44 einem Regler 45 zugeführt. Der Regler 45 erhält ferner einen Sollwert 46 für die Tabakdichte von einem nicht dargestellten Sollwertgeber. Der Regler 45 vergleicht den Sollwert 46 der Tabakdichte und den tatsächlichen Wert der Tabakdichte 44 und ermittelt daraus ein Stellsignal 47 für den Egalisator 30. Dabei wird das Stellsignal 47 einer Einrichtung 48 für die Höhenverstellung des Egalisators 30 zugeführt, welche die Höhe der Messer 31 des Egalisators 30 steuert.

Auf diese Weise erhält man einen Regelkreis zum Regeln der Tabakdichte in einem Zigarettenstrang 29. Der Regelkreis besteht dabei hauptsächlich aus der Meßeinrichtung 37, dem Regler 45 sowie der Einrichtung 48 zur Höhenverstellung der Messer 31 des Egalisators 30. Zum Berücksichtigen der die Tabakdichte beeinflussenden Feuchtigkeit des Tabaks wird ferner eine Feuchtemessung in den Regelkreis einbezogen. Dazu ist die Feuchtemeßeinrichtung 40, die Meßbrücke 42 sowie eine Verrechnungseinheit 43 vorgesehen, wobei die Verrechnungseinheit 43 das Feuchtemeßsignal 39 und das Rohsignal 38 der Meßeinrichtung 37 zu einem Tabakdichtesignal verrechnet.

Bei einer nicht dargestellten Variante des Regelkreises ist die Meßeinrichtung 37 - in Richtung R des Tabakstroms gesehen - nicht nach der Formateinrichtung 28 sondern vor der Formateinrichtung 28 angeordnet. Dies hat den Vorteil, daß die Meßeinrichtung 37 sehr nahe dem Egalisator 30 angeordnet werden kann. Dadurch ist die Totzeit im Regelkreis, die durch den Transport des Tabaks vom Egalisator 30 zur Meßeinrichtung 37 entsteht, deutlich kürzer. Durch eine kürzere Totzeit kann man Dichteschwankungen schneller entgegentreten. Demgegenüber hat eine Anordnung der Meßeinrichtung 37 - in Richtung des Tabakstroms gesehen - nach der Formateinrichtung 28 den Vorteil, daß die Tabakdichte in dem bereits fertigen Zigarettenstrang 29 (mit Umhüllung 33) gemessen werden kann. Eine Messung der Tabakdichte im fertigen Zigarettenstrang 29 liefert den endgültigen Dichtewert des Tabaks und somit einen sehr genauen Wert der Tabakdichte im Zigarettenstrang.

Bei einer ebenfalls nicht dargestellten Ausführungsform kann die Meßeinrichtung 62 auch in der Formateinrichtung 53 angeordnet sein. Dabei können die Vorteile einer Anordnung der Meßeinrichtung 62 vor bzw. nach der Formateinrichtung - zumindest teilweise - miteinander verknüpft werden. Außerdem ist dies eine platzsparende Lösung.

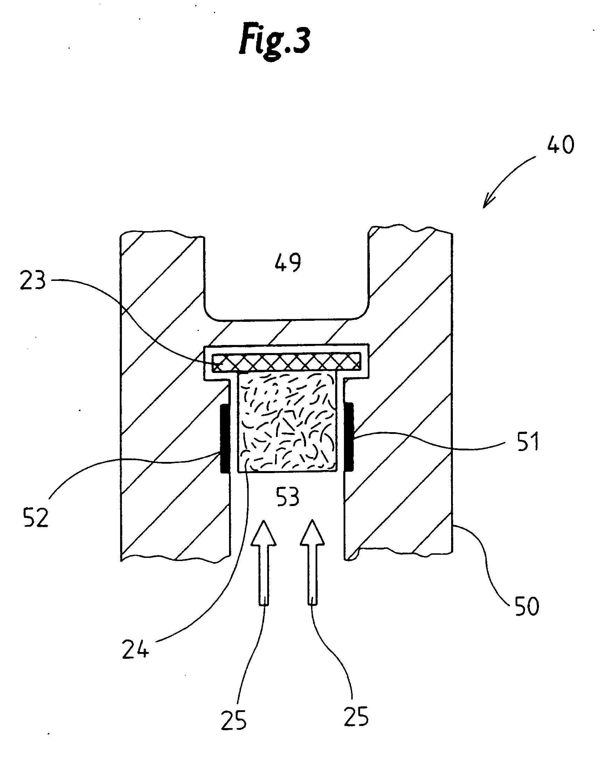

Fig. 3 zeigt eine Feuchtemeßeinrichtung 40. Tabak 24 befindet sich unterhalb des Tabakbandes 23, durch das es durch Blasluft 25 an dem mit Unterdruck beaufschlagtem Tabakband 23 haftet. Der Unterdruck wird in einer Unterdruckkammer 49 erzeugt. Ein Gehäuse 50 begrenzt diese Unterdruckkammer 49. Ferner führt das Gehäuse 50 das Tabakband 23 und dient der Aufnahme von Tabak 24. Außerdem sind in das Gehäuse 50 zwei Elektroden 51, 52 eingelassen. Diese Elektroden 51, 52 sind in einem von dem Gehäuse 50 gebildeten Kanal 53 vorgesehen. Die Elektroden 51, 52 befinden sich in einem derartigen Abstand zum Tabakband 23, daß sich zwischen ihnen angesaugter Tabak 24 befindet. Der Kanal 53 dient der Formung bzw. vorläufigen Formung des Tabakstrangs 32, insbesondere der Formung hinsichtlich der Breite des Tabakstrangs 32.

Mittels der Elektroden 51, 52 wird eine Leitfähigkeitsmessung am Tabak 24 vorgenommen. In Abhängigkeit der gemessenen Leitfähigkeit läßt sich die Feuchtigkeit des Tabaks bestimmen. Auf diese Weise erhält man ein Meßsignal 66 für die Feuchtigkeit des Tabaks.

An Stelle der in Fig. 3 gezeigten Meßeinrichtung zum Bestimmen der Tabakfeuchte kann man die Tabakfeuchte auch mittels einer weiteren Kernspinresonanzmessung gewinnen. Dabei müssen gegenüber der Dichtemessung mittels Kernspinresonanzmessung geänderte Einstellparameter gewählt werden. Vorzugsweise ist daher eine weitere Einrichtung zum Durchführen einer Kernspinresonanzmessung zum Bestimmen der Feuchtigkeit vorgesehen. Allerdings kann bei einer entsprechenden Programmierung der Kernspinresonanzmeßeinrichtung eine Messung von sowohl Tabakfeuchte als auch Tabakdichte mittels einer einzelnen Meßeinrichtung durchgeführt werden. Dies würde zu einem einfacheren Aufbau des gesamten Regelkreises führen und damit Kosten bei der Herstellung einer derartigen Maschine sparen.

Mittels der zuvor beschriebenen Regeleinrichtung zum Regulieren der Tabakdichte unter Berücksichtigung der Tabakfeuchte läßt sich ein sehr genauer Wert der Tabakdichte ermitteln und aufgrund des Kernspinresonanzverfahrens eine sehr schnelle Messung durchführen, insbesondere beim Einsatz des gepulsten Kernspinresonanzverfahrens. Dieses Verfahren erlaubt eine örtliche Auflösung im Tabak- bzw. Zigarettenstrang von 1 mm. Bei einer Tabak- bzw. Zigarettenstranggeschwindigkeit von 15 m pro Sekunde entspricht dies 15.000 Messungen pro Sekunde, d. h. einer Meßfrequenz von 15 kHz bzw. der Dauer einer Messung von 66 µs. Eine derart erzielte hohe Auflösung ist deshalb vorteilhaft, da auf diese Weise innerhalb kürzester Zeit Tabakdichteschwankungen entgegengewirkt werden kann. Das beschriebene Verfahren samt der beschriebenen Vorrichtung erlauben daher die Herstellung von Zigarettensträngen mit sehr gleichmäßiger Tabakdichte.

### Bezugszeichenliste

- 10: Tabak
- 11: Aufnahmeunterlage
- 12: äußeres Magnetfeld
- 13: Nordpol
- 14: Südpol
- 15: Hochfrequenzspule
- 16: Hochfrequenzsender
- 17: Impulsgenerator
- 18: Hochfrequenzimpuls
- 19: Hochfrequenzspulenlängsachse
- 20: induziertes Signal
- 21: Empfänger
- 22: Computer
- 23: Tabakband
- 24: Tabak
- 25: Blasluft
- 26: Umlenkwalze
- 27: Umlenkwalze
- 28: Formateinrichtung
- 29: Zigarettenstrang
- 30: Egalisator
- 31: Messer
- 32: Tabakstrang
- 33: Außenumhüllung
- 34: Formatband
- 35: Umlenkwalze
- 36: Strangeinheit
- 37: Meßeinrichtung
- 38: Rohsignal
- 39: Feuchtemeßsignal
- 40: Feuchtemeßeinrichtung
- 41: Signal
- 42: Meßbrücke
- 43: Verrechnungseinheit
- 44: Tabakdichte
- 45: Regler
- 46: Sollwert
- 47: Stellsignal
- 48: Einrichtung zur Höhenverstellung
- 49: Unterdruckkammer
- 50: Gehäuse
- 51: Elektrode
- 52: Elektrode
- 53: Kanal
- R: Richtung des Tabakstroms

## Patentansprüche

1. Verfahren zum Bestimmen der Dichte von Tabak (10, 24), insbesondere von geschnittenem Tabak zum Herstellen von Tabakwaren, bei dem Tabak (10, 24) in eine Meßeinrichtung (37) eingebracht und aus einem von der Meßeinrichtung (37) gewonnenen Meßsignal (20, 38) die Dichte des Tabaks (10, 24) ermittelt wird, **dadurch gekennzeichnet, daß** mit der Meßeinrichtung (37) eine das Meßsignal (20, 38) liefernde Kernspinresonanzmessung durchgeführt wird.

2. Verfahren nach Anspruch 1, **dadurch gekennzeichnet, daß** bei der Kernspinresonanzmessung folgende Schritte durchgeführt werden:
a) Anlegen eines äußeren Magnetfeldes (12), so daß magnetische Dipole von Atomkernen des Tabaks (10, 24) um das Magnetfeld (12) präzessieren,
b) Anlegen eines weiteren Feldes, so daß die Präzessionsbewegung gedreht wird,
c) Abschalten des weiteren Feldes und
d) Messen des bei der Wiederherstellung des Zustandes der Präzession um das Magnetfeld entstehenden Signals.

3. Verfahren nach Anspruch 1 oder 2, **dadurch gekennzeichnet, daß** das äußere Magnetfeld (12) mit einer im wesentlichen konstanten Feldstärke, insbesondere das Magnetfeld (12) eines Permanentmagneten (13, 14), angelegt wird.

4. Verfahren nach einem der vorstehenden Ansprüche, **dadurch gekennzeichnet, daß** ein Hochfrequenzimpuls (18) auf eine Spule (15) der Meßeinrichtung (36) gegeben wird, wobei die Spulenlängsachse (19) gegenüber den Feldlinien des Magnetfeldes (12) von im wesentlichen konstanter Feldstärke, insbesondere um etwa 90°, gedreht ist.

5. Verfahren nach einem der vorstehenden Ansprüche, **dadurch gekennzeichnet, daß** ein von der Spule (15) nach Abschalten des Hochfrequenzimpulses (18) abgegebenes Signal als das Meßsignal (38) gemessen wird.

6. Verfahren nach Anspruch 5, **dadurch gekennzeichnet, daß** der Hochfrequenzimpuls (18) als breitbandiger Hochfrequenzimpuls an die Spule (15) angelegt wird.

7. Verfahren nach einem der vorstehenden Ansprüche, **dadurch gekennzeichnet, daß** die Tabakfeuchte gemessen wird und die gemessene Tabakfeuchte beim Ermitteln der Tabakdichte berücksichtigt wird.

8. Verfahren nach Anspruch 7, **dadurch gekennzeichnet, daß** die Tabakfeuchte durch eine weitere Kernspinresonanzmessung gemessen wird.

9. Verfahren nach Anspruch 7 oder 8, **dadurch gekennzeichnet, daß** die Tabakfeuchte durch eine Leitfähigkeitsmessung am Tabak gemessen wird.

10. Verfahren zum Regeln der Dichte von Tabak (24) beim Herstellen von Tabakwaren, insbesondere der Tabakdichte von Zigaretten bzw. Zigarettensträngen (29), bei dem eine zugeführte Tabakmenge in Abhängigkeit einer ermittelten Tabakdichte (44) und unter Berücksichtigung eines Sollwertes (46) für die Tabakdichte eingestellt wird, **dadurch gekennzeichnet, daß** die Tabakdichte mit einem Verfahren nach einem der Ansprüche 1 bis 9 ermittelt wird.

11. Verfahren nach Anspruch 10, **dadurch gekennzeichnet, daß** der Tabak einer Formateinrichtung (28) zugeführt und die Tabakdichte in Tabakstromrichtung (R) gesehen vor, in und/oder nach der Formateinrichtung (28) ermittelt wird.

12. Verfahren nach Anspruch 10 oder 11, **dadurch gekennzeichnet, daß** die zugeführte Tabakmenge durch Variieren der Höhe des Tabakstrangs (32) eingestellt wird.

13. Verfahren nach Anspruch 12, **dadurch gekennzeichnet, daß** die Höhe des Tabakstrangs (32) durch Variieren eines Abstandes eines aus dem Tabakstrang Tabak herausschneidenden Egalisators (30) zum Tabakstrang (32) eingestellt wird.

14. Verfahren nach einem der Ansprüche 10 bis 13, **dadurch gekennzeichnet, daß** die zugeführte Tabakmenge durch Variieren der Breite des Tabakstrangs (32) eingestellt wird.

15. Vorrichtung zum Regeln der Tabakdichte beim Herstellen von Tabakwaren, insbesondere der Tabakdichte in Zigaretten bzw. Zigarettensträngen (29), mit Mitteln (30, 31, 48) zum Einstellen einer zugeführten Tabakmenge in Abhängigkeit von einer ermittelten Tabakdichte (44) und unter Berücksichtigung eines Sollwertes (46) für die Tabakdichte und mit einer Vorrichtung zum Bestimmen der Dichte von Tabak, die eine Meßeinrichtung (37) zur Aufnahme von Tabak und Mittel (12 - 17, 21, 22) zum Durchführen einer ein Meßsignal (20, 38) liefernden Kernspinresonanzmessung sowie Mittel (21, 22, 43) zum Ermitteln der Tabakdichte aus dem gewonnenen Meßsignal (20, 38) aufweist.

16. Vorrichtung nach Anspruch 15, **dadurch gekennzeichnet, daß** die Mittel (12-17, 21, 22) zum Durchführen einer Kernspinresonanzmessung aufweisen: Mittel zum Erzeugen eines Magnetfeldes (12) von im wesentlichen konstanter Feldstärke, insbesondere einen Permanentmagneten (13, 14), in einem zur Aufnahme von Tabak vorgesehenen Bereich (11); eine Spule (15), die in der Nähe des Bereichs (11) zur Aufnahme von Tabak (10, 24) angeordnet ist und deren Längsachse (19) gegenüber den Feldlinien des Magnetfeldes (12) von im wesentlichen konstanter Feldstärke, insbesondere um etwa 90°, gedreht ist, Mittel (16) zum Erzeugen eines Hochfrequenzimpulses (18) in der Spule (15), Mittel (21) zum Messen eines von der Spule (15) abgegebenen Signals (20) und Mittel (22) zum Auswerten des Meßsignals (20), um aus dem Meßsignal (20) die Tabakdichte zu ermitteln.

17. Vorrichtung nach Anspruch 15 oder 16, **dadurch gekennzeichnet, daß** Mittel (40, 51, 52) zum Messen der Tabakfeuchte vorgesehen sind, wobei die gemessene Tabakfeuchte beim Ermitteln der Tabakdichte einfließt.

18. Vorrichtung nach Anspruch 17, **dadurch gekennzeichnet, dass** die Mittel (40, 51, 52) zum Messen der Tabakfeuchte Mittel zum Durchführen einer Kernspinresonanzmessung aufweisen.

19. Vorrichtung nach einem der Ansprüche 17 oder 18, **dadurch gekennzeichnet, dass** die Mittel (40) zum Messen der Tabakfeuchte wenigstens zwei Elektroden (51, 52) zum Bestimmen der Leitfähigkeit von zwischen die Elektroden einbringbarem Tabak (24) aufweisen.

20. Vorrichtung nach einem der Ansprüche 15 - 19, **gekennzeichnet durch** eine Formateinrichtung (28), wobei die Meßeinrichtung (37) in Tabakstromrichtung (R) gesehen vor, in und/oder nach der Formateinrichtung (28) angeordnet ist.

21. Vorrichtung nach einem der Ansprüche 15 - 20, **dadurch gekennzeichnet, daß** die Mittel (30, 31, 48) zum Einstellen der zugeführten Tabakmenge einen Egalisator (30) aufweisen, der im Abstand zu einer Zuführeinrichtung (23-26, 49, 50, 53) zum Zuführen von Tabak (24) zur Formateinrichtung (28) variierbar ist, um somit die Höhe eines Tabakstrangs variieren zu können.

22. Vorrichtung nach einem der Ansprüche 15 - 21, **dadurch gekennzeichnet, daß** die Mittel (30, 31, 48) zum Einstellen der zugeführten Tabakmenge Einrichtungen zum Variieren der Breite des Tabakstranges aufweisen.

## Claims

1. Method for determining the density of tobacco (10, 24), in particular of cut tobacco for producing tobacco products, in which tobacco (10, 24) is introduced into a measuring device (37) and the density of the tobacco (10, 24) is determined from a measured signal (20, 38) obtained from the measuring device (37), **characterized in that** a nuclear spin resonance measurement supplying the measured signal (20, 38) is carried out with the measuring device (37).

2. Method according to Claim 1, **characterized in that** during the nuclear spin resonance measurement, the following steps are carried out:
a) applying an external magnetic field (12), so that magnetic dipoles of atomic nuclei of the tobacco (10, 24) precess around the magnetic field (12),
b) applying a further field, so that the precession movement is rotated,
c) switching off of the further field, and
d) measuring the signal arising as the state of the precession around the magnetic field is again produced.

3. Method according to Claim 1 or 2, **characterized in that** the external magnetic field (12) is applied with a substantially constant field strength, in particular the magnetic field (12) from a permanent magnet (13, 14).

4. Method according to one of the preceding claims, **characterized in that** a high-frequency pulse (18) is applied to a coil (15) of the measuring device (36), the coil longitudinal axis (19) being rotated with respect to the field lines of the magnetic field (12) of substantially constant field strengths, in particular by about 90°.

5. Method according to one of the preceding claims, **characterized in that** a signal output by the coil (15) after the high-frequency pulse (19) has been switched off is measured as the measured signal (38).

6. Method according to Claim 5, **characterized in that** the high-frequency pulse (18) is applied to the coil (15) as a broadband high-frequency pulse.

7. Method according to one of the preceding claims, **characterized in that** the tobacco moisture is measured and the measured tobacco moisture is taken into account when determining the tobacco density.

8. Method according to Claim 7, **characterized in that** the tobacco moisture is measured by means of a further nuclear spin resonance measurement.

9. Method according to Claim 7 or 8, **characterized in that** the tobacco moisture is measured by means of a conductivity measurement on the tobacco.

10. Method for regulating the density of tobacco (24) during the production of tobacco products, in particular the tobacco density of cigarettes or cigarette rods (29), in which a quantity of tobacco fed in is adjusted as a function of a determined tobacco density (44) and by taking account of a desired value (46) for the tobacco density, **characterized in that** the tobacco density is determined with a method according to one of Claims 1 to 9.

11. Method according to Claim 10, **characterized in that** the tobacco is fed to a format device (28) and the tobacco density is determined before, in and/or after the format device (28), as seen in the tobacco rod direction (R).

12. Method according to Claim 10 or 11, **characterized in that** the quantity of tobacco fed in is adjusted by varying the height of the tobacco rod (32).

13. Method according to Claim 12, **characterized in that** the height of the tobacco rod (32) is adjusted by varying a distance between an equalizer (30) cutting tobacco out of the tobacco rod and the tobacco rod (32).

14. Method according to one of Claims 10 to 13, **characterized in that** the quantity of tobacco fed in is adjusted by varying the width of the tobacco rod (32).

15. Apparatus for regulating the tobacco density during the production of tobacco products, in particular the tobacco density in cigarettes or cigarette rods (29), having means (30, 31, 48) for adjusting a quantity of tobacco fed in as a function of a determined tobacco density (44) and by taking account of a desired value (46) for the tobacco density and having an apparatus for determining the density of tobacco, which has a measuring device (37) for holding tobacco and means (12 - 17, 21 ,22) for carrying out a nuclear spin resonance measurement supplying a measured signal and also means (21, 22, 43) for determining the tobacco density from the measured signal (20, 38) obtained.

16. Apparatus according to Claim 15, **characterized in that** the means (12-17, 21, 22) for carrying out a nuclear spin resonance measurement have: means for generating a magnetic field (12) of substantially constant field strength, in particular a permanent magnet (13, 14), in a region (11) provided for holding tobacco; a coil (15), which is arranged in the vicinity of the region (11) for holding tobacco (10, 24) and whose longitudinal axis (19) is rotated with respect to the field lines of the magnetic field (12) of substantially constant field strength, in particular by about 90°; means (16) for generating a high-frequency pulse (18) in the coil (15); means (21) for measuring a signal (20) output by the coil (15); and means (22) for evaluating the measured signal (20) in order to determine the tobacco density from the measured signal (20).

17. Apparatus according to Claim 15 or 16, **characterized in that** means (40, 51, 52) for measuring the tobacco moisture are provided, the measured tobacco moisture being incorporated in the determination of the tobacco density.

18. Apparatus according to Claim 17, **characterized in that** the means (40, 51, 52) for measuring the tobacco moisture have means for carrying out a nuclear spin resonance measurement.

19. Apparatus according to one of Claims 17 or 18, **characterized in that** the means (40) for measuring the tobacco moisture have at least two electrodes (51, 52) for determining the conductivity of tobacco (24) that can be introduced between the electrodes.

20. Apparatus according to one of Claims 15 - 19, **characterized by** a format device (28), the measuring device (37) being arranged before, in and/or after the format device (28), as seen in the tobacco rod direction (R).

21. Apparatus according to one of Claims 15 - 20, **characterized in that** the means (30, 31, 48) for adjusting the quantity of tobacco fed in have an equalizer (30) of which the distance from a feed device (23-26, 49, 50, 53) for feeding tobacco (24) to the format device (28) can be varied in order thus to be able to vary the height of a tobacco rod.

22. Apparatus according to one of Claims 15 - 21, **characterized in that** the means (30, 31, 48) for adjusting the quantity of tobacco fed in have devices for varying the width of the tobacco rod.

## Revendications

1. Procédé pour déterminer la densité de tabac (10, 24), notamment de tabac haché pour la fabrication de produits à base de tabac, dans lequel le tabac (10, 24) est introduit dans un dispositif de mesure (37) et à partir d'un signal de mesure (20, 38) obtenu du dispositif de mesure (37), la densité du tabac (20, 24) est déterminée, **caractérisé en ce que** l'on effectue avec le dispositif de mesure (37) une mesure par résonance magnétique nucléaire fournissant le signal de mesure (20, 38).

2. Procédé selon la revendication 1, **caractérisé en ce que** lors de la mesure par résonance magnétique nucléaire, on met en oeuvre les étapes suivantes :
a) application d'un champ magnétique extérieur (12), de sorte que les dipôles magnétiques des noyaux atomiques du tabac (10, 24) effectuent un mouvement de précession autour du champ magnétique (12),
b) application d'un champ supplémentaire, de sorte que le mouvement de précession soit mis en rotation,
c) coupure du champ supplémentaire et
d) mesure du signal produit lors du rétablissement de l'état de précession autour du champ magnétique.

3. Procédé selon la revendication 1 ou 2, **caractérisé en ce que** le champ magnétique extérieur (12) est appliqué avec une intensité de champ essentiellement constante, notamment le champ magnétique (12) d'un aimant permanent (13, 14).

4. Procédé selon l'une quelconque des revendications précédentes, **caractérisé en ce qu'**une impulsion haute fréquence (18) est fournie à une bobine (15) du dispositif de mesure (36), l'axe longitudinal de la bobine (19) étant tourné par rapport aux lignes de champ du champ magnétique (12) d'une intensité de champ essentiellement constante, notamment d'environ 90°.

5. Procédé selon l'une quelconque des revendications précédentes, **caractérisé en ce qu'**un signal émis par la bobine (15) après la coupure de l'impulsion haute fréquence (18) est mesuré sous forme de signal de mesure (38).

6. Procédé selon la revendication 5, **caractérisé en ce que** l'impulsion haute fréquence (18) est appliquée à la bobine (15) sous forme d'impulsion haute fréquence à large bande.

7. Procédé selon l'une quelconque des revendications précédentes, **caractérisé en ce que** l'humidité du tabac est mesurée et l'humidité du tabac mesurée est prise en compte lors de la détection de la densité du tabac.

8. Procédé selon la revendication 7, **caractérisé en ce que** l'humidité du tabac est mesurée par une mesure par résonance magnétique nucléaire supplémentaire.

9. Procédé selon la revendication 7 ou 8, **caractérisé en ce que** l'humidité du tabac est mesurée par une mesure de la conductibilité du tabac.

10. Procédé de régulation de la densité de tabac (24) lors de la production de produits à base de tabac, notamment de la densité du tabac de cigarettes et/ou de tiges de cigarettes (29), dans lequel une quantité de tabac acheminée est ajustée en fonction d'une densité de tabac détectée (44) et en tenant compte d'une valeur de consigne (46) pour la densité de tabac, **caractérisé en ce que** la densité de tabac est détectée par un procédé selon l'une quelconque des revendications 1 à 9.

11. Procédé selon la revendication 10, **caractérisé en ce que** le tabac est acheminé à un dispositif de formatage (28) et la densité de tabac, vue dans la direction d'avance du tabac (R), est détectée avant, dans, et/ou après le dispositif de formatage (28).

12. Procédé selon la revendication 10 ou 11, **caractérisé en ce que** la quantité de tabac acheminée est ajustée en faisant varier la hauteur de la tige de tabac (32).

13. Procédé selon la revendication 12, **caractérisé en ce que** la hauteur de la tige de tabac (32) est ajustée en faisant varier une distance entre un égalisateur (30) découpant du tabac hors de la tige de tabac et la tige de tabac (32).

14. Procédé selon l'une quelconque des revendications 10 à 13, **caractérisé en ce que** la quantité de tabac acheminée est ajustée en faisant varier la largeur de la tige de tabac (32).

15. Dispositif de régulation de la densité de tabac lors de la production de produits à base de tabac, notamment de la densité du tabac de cigarettes et/ou de tiges de cigarettes (29), comprenant des moyens (30, 31, 48) pour ajuster une quantité de tabac acheminée en fonction d'une densité de tabac détectée (44) et en tenant compte d'une valeur de consigne (46) pour la densité de tabac ainsi qu'un dispositif pour déterminer la densité de tabac, comprenant un dispositif de mesure (37) pour recevoir du tabac et des moyens (12-17, 21, 22) pour réaliser une mesure par résonance magnétique nucléaire fournissant un signal de mesure (20, 38), ainsi que des moyens (21, 22, 43) pour déterminer la densité de tabac à partir du signal de mesure obtenu (20, 38).

16. Dispositif selon la revendication 15, **caractérisé en ce que** les moyens (12-17, 21, 22) pour réaliser une mesure par résonance magnétique nucléaire présentent : des moyens de production d'un champ magnétique (12) d'intensité de champ essentiellement constante, notamment un aimant permanent (13, 14), dans une région (11) prévue pour recevoir du tabac ; une bobine (15), qui est disposée à proximité de la région (11) pour recevoir du tabac (10, 24) et dont l'axe longitudinal (19) est tourné par rapport aux lignes de champ du champ magnétique (12) d'intensité de champ essentiellement constante, notamment d'environ 90°, des moyens (16) pour produire une impulsion haute fréquence (18) dans la bobine (15), des moyens (21) pour mesurer un signal (20) émis par la bobine (15) et des moyens (22) pour analyser le signal de mesure (20) afin de déterminer, à partir du signal de mesure (20), la densité du tabac.

17. Dispositif selon la revendication 15 ou 16, **caractérisé en ce que** des moyens (40, 51, 52) pour mesurer l'humidité du tabac sont prévus, l'humidité du tabac mesurée influençant la densité du tabac lors de la détection.

18. Dispositif selon la revendication 17, **caractérisé en ce que** les moyens (40, 51, 52) pour mesurer l'humidité du tabac présentent des moyens pour effectuer une mesure par résonance magnétique nucléaire.

19. Dispositif selon l'une des revendications 17 ou 18, **caractérisé en ce que** les moyens (40) pour mesurer l'humidité du tabac présentent au moins deux électrodes (51, 52) pour déterminer la conductibilité du tabac (24) pouvant être introduit entre les électrodes.

20. Dispositif selon l'une des revendications 15-19, **caractérisé par** un dispositif de formatage (28), dans lequel le dispositif de mesure (37), vu dans la direction d'avance du tabac (R), est disposé avant, dans et/ou après le dispositif de formatage (28).

21. Dispositif selon l'une des revendications 15-20, **caractérisé en ce que** les moyens (30, 31, 48) pour ajuster la quantité de tabac acheminée présentent un égalisateur (30) dont la distance à un dispositif d'acheminement (23-26, 49, 50, 53) pour l'acheminement du tabac (24) au dispositif de formatage (28) peut être variée, afin de pouvoir ainsi faire varier la hauteur d'une tige de tabac.

22. Dispositif selon l'une des revendications 15-21, **caractérisé en ce que** les moyens (30, 31, 48) pour ajuster la quantité de tabac acheminée présentent des dispositifs pour faire varier la largeur de la tige de tabac.
